# EUROPÄISCHE PATENTANMELDUNG

(11) **EP 3 905 498 A1**
(43) Veröffentlichungstag der Anmeldung: **03.11.2021**
(21) Anmeldenummer: 20171701.4
(22) Anmeldetag: 28.04.2020
(51) Int. Cl.: H02M 3/158, H02M 1/42, H02M 1/00

(54) **VERFAHREN ZUM REGELN EINES TIEF-HOCHSETZSTELLERS**

(71) Anmelder: Siemens Aktiengesellschaft, 80333 München (DE)
(72) Erfinder: Schulz, Stefan, 2152 Gnadendorf (AT)
(74) Vertreter: Maier, Daniel Oliver

(57) **Zusammenfassung**

Die Erfindung betrifft ein Verfahren zur Regelung eines getakteten Tief-Hochsetzstellers (TH), welcher zumindest zwei Schaltelemente (SE1, SE2) und eine Induktivität (L) aufweist und von welchem eine Eingangsspannung (Ue) in eine geregelte Ausgangsspannung (Ua) umgewandelt wird. Dabei wird ein erstes Schaltelement bzw. Tiefsetzer-Schaltelement (SE1) von einem ersten Steuersignal (S1) und ein zweites Schaltelement bzw. Hochsetzer-Schaltelement (SE2) mit einem zweiten Steuersignal (S2) getaktet. Das erste wie das zweite Steuersignal (S1, S2) werden aus einer Regler-Stellgröße (SG) abgeleitet, welche von einer Reglereinheit (RE) zur Regelung der Ausgangsspannung (Ua) des Tief-Hochsetzstellers (TH) zur Verfügung gestellt wird und welche eine Einschaltdauer (Tₑ₁, Tₑ₂) des ersten und des zweiten Schaltelements (SE1, SE2) festlegt. Dabei werden in Abhängigkeit von der Eingangs- und Ausgangsspannung (Ue, Ua) des Tief-Hochsetzstellers (TH) aus der Regler-Stellgröße (SG) für das erste Steuersignal (S1) eine erste Stellgröße (SG1) und für das zweite Steuersignal (S2) eine zweite Stellgröße (SG2) erzeugt. Zum Erzeugen der ersten Stellgröße (SG1) wird die Regler-Stellgröße (SG) mit einer vorgebbaren ersten Verstärkung (k1) verstärkt. Zum Erzeugen der zweiten Stellgröße (SG2) wird von der Regler-Stellgröße (SG) ein Offset-Wert (OW) abgezogen und die Regler-Stellgröße (SG) mit einer vorgebbaren zweiten Verstärkung (k2) verstärkt, welche maximal gleich oder geringer als die vorgebbare erste Verstärkung ist. Zum Generieren des ersten bzw. zweiten Steuersignals (S1, S2) werden dann die beiden Stellgrößen (SG1, SG2) mit einem Sägezahnsignal (CT) verglichen und die beiden Schaltelemente (SE1, SE2) des Tief-Hochsetzstellers (TH) entsprechend angesteuert bzw. getaktet.

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf ein Verfahren zur Regelung eines Gleichspannungswandlers, insbesondere eines getakteten Tief-Hochsetzstellers, welcher zumindest zwei Schaltelemente und eine Induktivität bzw. Drossel aufweist und von welchem eine Eingangsspannung in eine geregelte Ausgangsspannung umgewandelt wird. Dabei wird ein erstes Schaltelement, welches einem Tiefsetzerteil des Tief-Hochsetzstellers zugeordnet ist, von einem ersten Steuersignal und ein zweites Schaltelement, welches einem Hochsetzerteil des Tief-Hochsetzstellers zugeordnet ist, mit einem zweiten Steuersignal getaktet. Das erste wie das zweite Steuersignal werden dabei von eine Regler-Stellgröße abgeleitet, welche von einer Reglereinheit zur Regelung der Ausgangsspannung des Tief-Hochsetzstellers zur Verfügung gestellt wird und welche eine Einschaltdauer des ersten und des zweiten Schaltelements festlegt.

### Stand der Technik

In vielen Bereich, wie z.B. Automatisierung des Industriebereichs, Automotivbereich, etc. werden heutzutage Schaltnetzteile bzw. Schaltgeräte als Stromversorgung für z.B. Steuergeräte, elektronische Geräte, Antriebe, etc. in Anlagen oder ähnlichem eingesetzt. Sie werden vor allem dazu verwendet, eine Last bzw. einen Verbraucher (z.B. Antrieb, Motor, Steuergerät, etc.) an ein Stromnetz oder eine Stromquelle, wie z.B. eine Batterie, anzubinden und mit einer meist konstanten und häufig vorgegebenen Spannung zu versorgen. Von einem Schaltnetzteil wird daher eine meist unstabilisierte Eingangsspannung, welche meist als Gleich- oder Wechselspannung aus einer Stromquelle stammt, in eine konstante Ausgangsspannung zur Versorgung der Last bzw. des Verbrauchers umgewandelt. Eine Konstanz der Ausgangsspannung und/oder des Ausgangsstromes wird dabei durch einen Steuerung und Regelung des Energieflusses in das Schaltnetzteil bzw. in die Last erzielt.

Je nach Bedarf gibt es unterschiedliche Ausprägungen von Schaltnetzteilen. Beispielsweise für eine Anbindung an ein Wechselspannungsnetz bzw. eine Wechselspannungsquelle kann eine Gleichrichtung der Netzspannung im Schaltnetzteil durchgeführt werden. Um die gleichgerichtete Eingangsspannung bzw. eine unstabilisierte bzw. schwankende Gleichspannung in eine konstante Ausgangsspannung umzuwandeln, werden üblicherweise sogenannte Gleichspannungswandler oder DC-DC-Wandler verwendet. Diese können beispielsweise auch vor allem bei Hochleistungsanwendungen als Filter und/oder für eine aktive Leistungsfaktorkorrektur (PFC) in Schaltnetzeilen eingesetzt werden. Dadurch können z.B. negative Einflüsse auf das Stromnetz durch das Schaltnetzteil, so genannte Netzrückwirkungen, geringgehalten werden.

Ein Gleichspannungs- oder DC-DC-Wandler stellt üblicherweise eine elektrische Schaltung dar, durch welche eine am Eingang zugeführte (meist unstabilisierte) Gleichspannung (z.B. eine gleichgerichtete Wechselspannung, Gleichspannung aus einem Batteriemodul, etc.) in eine Gleichspannung am Ausgang umgewandelt wird. Diese Gleichspannung am Ausgang des Wandlers bzw. diese Ausgangsspannung kann ein niedrigeres, gleiches oder höheres Spannungsniveau als die am Eingang zugeführte Spannung bzw. die Eingangsspannung aufweisen. Die Umsetzung der Eingangsspannung in die meist vorgegebene Ausgangsspannung erfolgt üblicherweise mit Hilfe zumindest eines periodisch arbeitenden Schaltelements (z.B. Halbleiterschaltelement, etc.) und eines Energiespeichers, welcher bei sogenannten "induktiven Wandlern" beispielsweise als Induktivität (z.B. Spule, Drossel, Transformator) ausgeführt sein kann. Im Gegensatz dazu werden Wandler mit kapazitiver Speicherung (kapazitive Wandler) als Ladungspumpen bezeichnet.

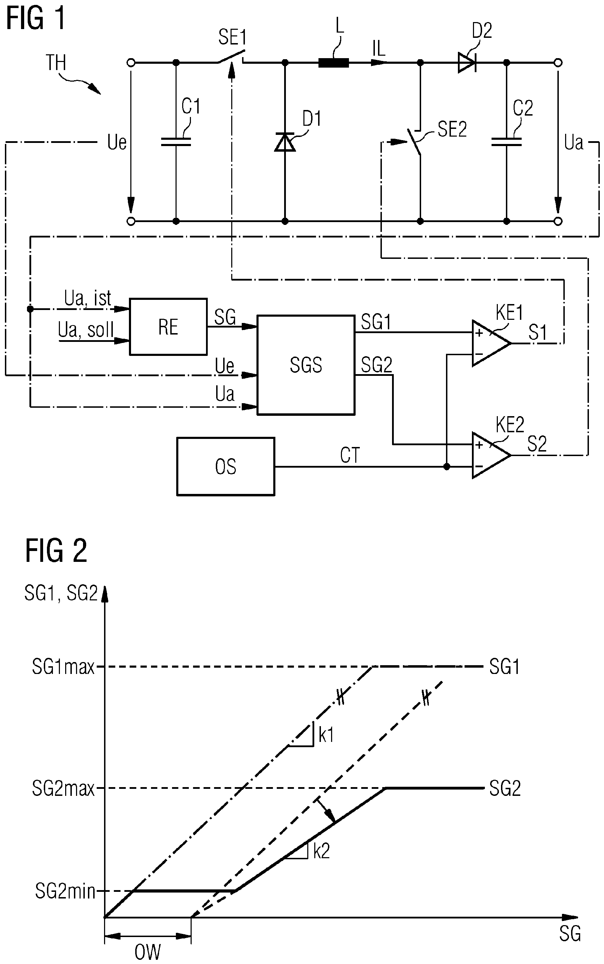

Ein Gleichspannungswandler, welcher eine Ausgangsspannung größer, gleich und/oder kleiner als eine Eingangsspannung - je nach Anwendungsfall - liefern kann, ist beispielsweise ein sogenannter Tief-Hochsetzsteller, welcher auch als Abwärts-Aufwärtswandler oder Buck-Boost-Konverter bezeichnet wird. Beim Tief-Hochsetzsteller ist beispielsweise einem Tiefsetzsteller bzw. Abwärtswandler ein Hochsetzsteller bzw. Aufwärtswandler nachgeschaltet. Dabei weisen sowohl der Tiefsetzsteller als auch der Hochsetzsteller jeweils zumindest ein Schaltelement auf und teilen sich einen als Induktivität bzw. Spule ausgeführten, gemeinsamen Energiespeicher. Eine beispielhafte Schaltung eines Buck-Boost-Konverters bzw. Tief-Hochsetzstellers ist z.B. schematisch im oberen Teil der Figur 1 dargestellt.

Tief-Hochsetzsteller werden vor allem bei schwankenden Eingangsspannungen (z.B. gleichgerichtete Wechselspannung, welche einen so genannten Rippel bzw. Restwelligkeit aufweist, etc.) eingesetzt. Die Umsetzung der Eingangsspannung in eine geregelte Ausgangsspannung kann in einem kontinuierlichen Betrieb mit einer fixen Schaltfrequenz oder in einem diskontinuierlichen Betrieb bzw. lückenden Betrieb (DCM - discontinuous conduction mode) des Tief-Hochsetzstellers erfolgen.

Beim kontinuierlichen Betrieb mit fixer Schaltfrequenz werden z.B. die Schaltelemente des Tief-Hochsetzstellers mit einer fixen Anzahl an Ein- und Ausschaltvorgängen pro Zeitintervall geschaltet. Dies hat vor allem bei höheren Eingangs- bzw. Ausgangsspannungen den Nachteil, dass die Schaltelemente nicht zum optimalen Zeitpunkt eingeschaltet werden und dass durch die fixfrequente Ansteuerung hohe Schaltverluste und hohe Störaussendungen (z.B. in Form von Geräuschen und/oder elektromagnetischer Strahlung - so genannten EMV-Störungen) auftreten können.

Bei einer Umsetzung der Eingangsspannung in eine geregelte Ausgangsspannung im diskontinuierlichen oder lückenden Betrieb (DCM) des Tief-Hochsetzstellers wird beispielsweise das jeweilige Schaltelement eingeschaltet, nachdem die Induktivität des Tief-Hochsetzstellers entmagnetisiert ist. Dadurch tritt eine Totzeit auf. Bei einer fixfrequenten Ansteuerung der Schaltelemente im diskontinuierlichen Betrieb kann es ebenfalls zu hohen Schaltverlusten kommen, wenn parasitäre Kapazitäten, welche z.B. in den Schaltelementen (z.B. Feldeffekttransistoren, etc.) und in Induktivitäten (z.B. Drosseln, Transformatoren, etc.) enthalten sind, vor einem nächsten Einschaltzeitpunkt auf entsprechend hohe Spannungen aufgeladen werden. Beim Einschalten eines Schaltelements im nächsten Taktzyklus werden diese parasitären Kapazitäten z.B. über das Schaltelement (z.B. Transistor) entladen bzw. umgeladen und erzeugen dabei je nach anliegender Spannung mehr oder weniger hohe Stromspitzen, welche bei entsprechend hoher Spannung zu entsprechend hohen Schaltverlusten führen.

Um diese Schaltverluste, insbesondere bei hohen Eingangs- und Ausgangsspannungen - zu minimieren, kann beispielsweise so genanntes quasiresonantes Schalten oder so genanntes Valley-Switching der Schaltelemente des Tief-Hochsetzstellers angestrebt werden. Beim quasiresonanten Schalten wird beispielsweise mittels eines Erkennungskreises ein Minimum (auch "Valley" genannt) der Spannung an zumindest einem Schaltelement des Wandlers erkannt und das zumindest eine Schaltelement erst zu diesem Zeitpunkt eingeschaltet. Da die parasitäre Kapazität auf die Mindestspannung entladen ist, wird auf diese Weise die Einschaltstromspitze minimiert und eine Reduktion der Schaltverluste und der Störabstrahlung erreicht. Eine quasiresonante Ansteuerung erfordert eine entsprechende Ansteuerung der Schaltelemente mit einer gemeinsamen, variablen Schaltfrequenz, aber unterschiedlichen Einschaltdauern, welche durch entsprechende Steuersignale vorgegeben werden.

Weiterhin kann ein Tief-Hochsetzsteller in Abhängigkeit von einem Verhältnis zwischen Eingangs- und Ausgangsspannung in unterschiedlichen Betriebsmodi betrieben werden. Ist die Eingangsspannung z.B. wesentlich größer als die Ausgangsspannung, wird der Tief-Hochsetzsteller meist nur im Tiefsetzer- bzw. Buck-Modus betrieben. D.h. in diesem Modus wird nur das Schaltelement des Tiefsetzstellers geschaltet, während das Schaltelement des Hochsetzstellers konstant ausgeschaltet bleibt. Unterschreitet eine Differenzspannung zwischen Eingangs- und Ausgangsspannung des Tief-Hochsetzstellers z.B. einen gewissen Mindestwert, so wird der Tief-Hochsetzsteller üblicherweise im so genannten Mischbetrieb betrieben. D.h. es werden sowohl das Schaltelement des Tiefsetzstellers als auch das Schaltelement des Hochsetzstellers mit identer Schaltfrequenz, aber unterschiedlicher Einschaltdauer geschaltet.

Eine Regelung der Ausgangsspannung des Tief-Hochsetzstellers auf einen vorgegebenen Wert kann beispielsweise mittels eines übergeordneten Regelkreises erfolgen, welcher z.B. zumindest einen Pulsbreitenmodulator enthalten kann, wobei das Tastverhältnis zum Zwecke der Regelung geändert werden kann. In Abhängigkeit von den Tastverhältnissen der Schaltelemente kann ein Übertragungsverhältnis zwischen der Eingangs- und Ausgangsspannung variiert werden. Das bedeutet, die Regelung des Tief-Hochsetzstellers erfolgt üblicherweise durch eine geeignete Einstellung der Tastverhältnisse der Steuersignale für die Schaltelemente bzw. Einschaltdauern der Schaltelemente, wobei Einflüsse, wie z.B. variable bzw. schwankende Eingangsspannung, Laständerungen, Bauteilvarianzen, etc. berücksichtigt werden müssen. Weiterhin kann auch ein Übergang zwischen den Betriebsmodi - z.B. vom Tiefsetzer-Modus auf den Mischbetrieb oder umgekehrt - aufgrund von Unstetigkeiten zu Störungen und Verlusten bei der Regelung führen, welche nachteilige Auswirkungen auf das Gesamtsystem - d.h. Tief-Hochsetzsteller und übergeordneten Regelkreis - haben können.

Aus der Schrift EP 2 479 878 B1 ist beispielsweise ein Verfahren zur Regelung eines Tief-Hochsetzstellers bekannt. Bei diesem Verfahren wird ein Strom im Schaltelement des Tiefsetzers bzw. im sogenannten Tiefsetzer-Schaltelement erfasst und das Tiefsetzer-Schaltelement derart geregelt, dass nach einer Entmagnetisierung der Induktivität bzw. der Drossel - d.h. im sogenannten diskontinuierlichen Betrieb des Tief-Hochsetzstellers - ein eindeutiger Resonanzzustand besteht, durch welchen ein sogenanntes quasiresonantes Schalten ermöglicht wird.

Beim sogenannten quasiresonanten Schalten bzw. sogenannten Valley-Switching werden die Schaltelemente des Tief-Hochsetzstellers in einem Minimum (auch "Valley" genannt) der Spannung an den Schaltelementen meist gleichzeitig eingeschaltet, um - insbesondere bei hohen Eingangs- und Ausgangsspannungen - Schaltverluste und elektromagnetische Störungen geringzuhalten bzw. zu minimieren. Die Minima im Spannungsverlauf an den Schaltelementen des Wandlers können z.B. mittels eines Erkennungskreises erkannt werden. Das Einschalten während eines Valleys bewirkt ein laufendes Zurücksetzen des Periodenbeginns (Impuls-Reset) und somit ein Anpassen der Schaltfrequenz.

Das bedeutet, bei dem in der Schrift EP 2 479 878 B1 bekannten Regelungsverfahren für einen Tief-Hochsetzsteller kann zwar ein eindeutiger Resonanzzustand und damit ein problemloses, quasiresonantes und damit verlustarmes (Ein-)Schalten der Schaltelemente sichergestellt werden. Das beschriebene Regelverfahren berücksichtigt allerdings keine Unstetigkeiten, unterschiedliche Verstärkungen und Nichtlinearitäten der Regelstrecke, welche der Tief-Hochsetzsteller je nach Verhältnis von Eingangs- zu Ausgangsspannung - und vor allem auch bei Übergängen zwischen Betriebsmodi - aufweisen kann. Diese Unstetigkeiten und/oder Nichtlinearitäten können bei der Regelung des Tief-Hochsetzstellers negative Auswirkungen (z.B. Störungen, Schwingungen im Regelkreis, etc.) bewirken. Ein möglicher, übergeordneter Regelkreis müsste daher beispielsweise entsprechend langsam ausgelegt werden, wodurch dynamische Vorgänge, wie z.B. Eingangsspannungs- bzw. Laständerungen, nur sehr langsam ausgeregelt werden können.

### Darstellung der Erfindung

Der Erfindung liegt daher die Aufgabe zugrunde, ein Verfahren zur Regelung eines getakteten Tief-Hochsetzstellers anzugeben, durch welches auf einfache und kostengünstige Weise eine Verbesserung gegenüber dem Stand der Technik, insbesondere eine rasche und kontinuierliche Ausregelung von dynamischen Vorgängen, wie z.B. bei Änderungen der Eingangsspannung und/oder der Last oder bei Übergängen zwischen unterschiedlichen Betriebsmodi, ermöglicht wird.

Diese Aufgabe wird durch ein Verfahren gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Regeln eines getakteten Tief-Hochsetzstellers, welcher zumindest zwei Schaltelemente und eine Induktivität bzw. Drossel aufweist und von welchem eine Eingangsspannung in eine geregelte Ausgangsspannung umgewandelt wird. Dabei wird ein erstes Schaltelement bzw. Tiefsetzer-Schaltelement, welches einem Tiefsetzerteil des Tief-Hochsetzstellers zugeordnet ist, von einem ersten Steuersignal und ein zweites Schaltelement bzw. Hochsetzer-Schaltelement, welches einem Hochsetzerteil des Tief-Hochsetzstellers zugeordnet ist, getaktet. Das erste Steuersignal wie das zweite Steuersignal werden dabei von eine Regler-Stellgröße abgeleitet, welche von einer Reglereinheit zur Regelung der Ausgangsspannung des Tief-Hochsetzstellers zur Verfügung gestellt wird. Dabei wird von der Regler-Stellgröße eine Einschaltdauer des ersten Schaltelements und eine Einschaltdauer des zweiten Schaltelements definiert. Dazu werden in Abhängigkeit von der Eingangs- und Ausgangsspannung des Tief-Hochsetzstellers aus der Regler-Stellgröße für das erste Steuersignal eine erste Stellgröße und für das zweite Steuersignal eine zweite Stellgröße erzeugt. Die Regler-Stellgröße wird zum Erzeugen der ersten Stellgröße für das erste Steuersignal und damit zum Ansteuern des ersten Schaltelements bzw. des Tiefsetzer-Schaltelements mit einer vorgebbaren ersten Verstärkung verstärkt. Zum Erzeugen der zweiten Stellgröße für das zweite Steuersignal bzw. zum Ansteuern des zweiten Schaltelements bzw. Hochsetzer-Schaltelements wird von der Regler-Stellgröße ein vorgebbarer Offset-Wert abgezogen und die Regler-Stellgröße mit einer vorgebbaren zweiten Verstärkung verstärkt. Dabei ist die zweite Verstärkung maximal gleich oder geringer als die erste Verstärkung.

Der Hauptaspekt der erfindungsgemäß vorgeschlagenen Lösung besteht darin, dass aus einer Regler-Stellgröße, welche von einer Reglereinheit auf Basis der Ausgangsspannung des Tief-Hochsetzstellers ermittelt wird, in Abhängigkeit von einer jeweils aktuell vorliegenden Kombination der Eingangsspannung und der Ausgangsspannung des Tief-Hochsetzstellers zwei Stellgrößen erzeugt werden, aus welchen die jeweiligen Steuersignale für die Schaltelemente des Tief-Hochsetzsteller getrennt voneinander abgeleitet und damit unterschiedliche Einschaltdauern bzw. Abschaltzeitpunkte für die Schaltelemente definiert werden können. D.h. abhängig von der jeweiligen Eingangs- und Ausgangsspannung des Tief-Hochsetzstellers werden zwei unterschiedliche Steuersignale für die Schaltelemente derart erzeugt, dass der Tief-Hochsetzsteller für den übergeordneten Regelkreis zur Regelung der Ausgangsspannung eine möglichst lineare Regelstrecke darstellt. Dadurch kann der Regelkreis bzw. die Regelung des Tief-Hochsetzstellers idealerweise für ein möglichst schnelles Führungs- und Störungsverhalten ausgelegt werden. Damit können dynamische Vorgänge, wie z.B. Eingangsspannungs- und/oder Laständerungen sehr schnell ausgeregelt werden. Durch das erfindungsgemäße Verfahren und die daraus ableitbaren pulsweitenmodulierten Steuersignale für den Tief-Hochsetzsteller ergibt sich in vorteilhafter Weise eine möglichst lineare Regelstrecke, und damit auf einfache Art und Weise ein möglichst schneller, geschlossener Regelkreis, dessen Ausregelzeiten in unterschiedlichen Arbeitspunkten, bei unterschiedlichen Eingangsspannungen, Ausgangsspannungen bzw. Lastfällen weitgehend ident sind. Damit wird auch eine Integration in ein übergeordnetes Regelsystem erleichtert.

Durch die beiden Stellgrößen, aus welchen die Steuersignale für das jeweilige Schaltelemente abgeleitet werden, kann auch ein fließender Übergang zwischen den Betriebsarten, insbesondere dem Tiefsetzer-Modus und dem Mischbetrieb, erreicht werden, in welchen ein Tief-Hochsetzsteller in Abhängigkeit von der Eingangs- und Ausgangsspannung betrieben werden kann. Durch den Offset-Wert zwischen erster und zweiter Stellgröße muss die Regler-Stellgröße erst diesen Wert überschreiten, damit ein zweites Steuersignal für das zweite Schaltelement bzw. das Hochsetzer-Schaltelement generiert wird und das zweite Schaltelement zu schalten beginnt. Unterhalb des Offset-Werts bleibt das zweite Schaltelement und damit der Hochsetzer-Teil des Tief-Hochsetzstellers komplett ausgeschaltet. Das bedeutet, nur das erste Schaltelement des Tiefsetzer-Teils taktet und der Tief-Hochsetzsteller arbeitet im so genannte Tiefsetzer-Modus.

Hat die Regler-Stellgröße den Offset-Wert überschritten, so wird auf Basis der zweiten Stellgröße ein zweites Steuersignal generiert und das zweite Schaltelement beginnt zu schalten. D.h. der Tief-Hochsetzsteller wechselt vom Tiefsetzer-Modus in den Mischbetrieb, bei welchem beide Schaltelemente mit unterschiedlichen Einschaltdauern geschaltet werden. Mit steigender Regler-Stellgröße werden die Einschaltdauern bei den beiden Steuersignalen und damit für die beiden Schaltelemente sukzessive erhöht, wobei die Einschaltdauer des zweiten Schaltelements bzw. des Hochsetzer-Schaltelements im Vergleich zur Einschaltdauer des ersten Schaltelements bzw. Tiefsetzer-Schaltelements langsamer aufgrund der geringeren Verstärkung der zweiten Stellgröße ansteigt. Durch den Einsatz des erfindungsgemäßen Verfahrens kann damit fließend und kontinuierlich in Abhängigkeit von einem Verhältnis der Eingangs- und Ausgangsspannung des Tief-Hochsetzstellers von einem Tiefsetzer-Modus in einen Mischbetrieb oder umgekehrt gewechselt werden.

Um idealerweise Unstetigkeiten und Instabilitäten beim Wechsel zwischen Tiefsetzer-Modus und Mischbetrieb des Tief-Hochsetzstellers, welche zu Schwingungen im Eingangsfilter und/oder bei der Eingangsspannung des Tief-Hochsetzstellers führen können, zu verhindern, wird bei Überschreiten des Offset-Wertes durch die Regler-Stellgröße eine Ableitung der ersten Stellgröße aus der Regler-Stellgröße derart angepasst, dass die Einschaltdauer für das erste Schaltelement unmittelbar reduziert wird. Dadurch wird eine sprunghafte Änderung des Stroms durch die Induktivität des Tief-Hochsetzstellers verhindert, welche vor allem durch nichtlineare, parasitäre Kapazitäten der Schaltelemente (z.B. Feldeffekttransistoren, etc.) bedingt ist. Eine Reduktion der Einschaltdauer des ersten Schaltelements bzw. des Tiefsetzer-Schaltelements kann beispielsweise in Abhängigkeit von unterschiedlichen Parametern (z.B. Eingangsspannung, Ausgangsspannung, etc.) erfolgen, um einen idealen, kontinuierlichen Übergang zwischen Tiefsetzer-Modus und Mischbetrieb zu erzielen.

Es ist vorteilhaft, wenn der Offset-Wert in Abhängigkeit von einer Differenzspannung zwischen der Eingangsspannung und der Ausgangsspannung des Tief-Hochsetzstellers verändert, vor allem erhöht wird. Idealerweise kann diese Veränderung z.B. durch eine Erhöhung des Offset-Werts von Null bis zu einem vorgebbaren Maximalwert mit steigender Differenzspannung zwischen Eingangs- und Ausgangsspannung erfolgen. Die Erhöhung kann beispielsweise linear erfolgen.

Durch die Veränderung des Offset-Werts in Abhängigkeit von der Differenzspannung zwischen Eingangs- und Ausgangsspannung des Tief-Hochsetzstellers kann auf einfache Weise erreicht werden, dass bei einer hohen Differenzspannung zwischen Eingangs- und Ausgangsspannung, wobei die Eingangsspannung größer als die Ausgangsspannung ist, der Tief-Hochsetzsteller länger (d.h. über einen größeren Ausgangsleistungsbereich) im Tiefsetzer- bzw. Buck-Modus arbeitet. Das bedeutet, dass zuerst nur das erste Schaltelement bzw. das Tiefsetzer-Schaltelement des Tief-Hochsetzstellers geschaltet wird. Ein Wechsel in den Mischbetrieb - d.h. das zusätzliche Schalten des zweiten Schaltelements bzw. des Hochsetzer-Schaltelements würde durch einen höheren Offset-Wert erst bei einer höheren Regler-Stellgröße erfolgen als bei einer geringeren Differenzspannung, bei welcher der Offset-Wert einen niedrigeren Wert aufweist. Bei einer geringen Differenzspannung zwischen Eingangs- und Ausgangsspannung (d.h. wenn sich Eingangs- und Ausgangsspannung annähern bzw. fast gleich sind) wird der z.B. entsprechend niedrigere Offset-Wert von der Regler-Stellgröße früher (d.h. schon bei einer kleineren Ausgangsleistung) überschritten und das zweite Schaltelement bzw. das Hochsetzer-Schaltelement beginnt früher zu schalten. D.h. der Tief-Hochsetzsteller arbeitet bei einer geringen Differenzspannung zwischen Eingangs- und Ausgangsspannung früher (d.h. schon bei einer kleineren Ausgangsleistung) im Mischbetrieb als bei einer großen Differenzspannung.

Weiterhin ist es günstig, wenn die erste Stellgröße durch eine erste Obergrenze und die zweite Stellgröße durch eine zweite Obergrenze begrenzt werden. Dabei wird für die erste Obergrenze, welche die erste Stellgröße zum Ableiten des ersten Steuersignals für das Tiefsetzer-Schaltelement nach oben hin begrenzt, ein größerer Wert gewählt als für die zweite Obergrenze, durch welche die zweite Stellgröße für das zweite Steuersignal zum Takten des Hochsetzer-Schaltelements begrenzt wird. Die vorgebbaren Werte für die erste und zweite Obergrenze können beispielsweise in Abhängigkeit von einem vorgegebenen oder zulässigen Bereich für die gemeinsame Schaltfrequenz der beiden Schaltelemente des Tief-Hochsetzstellers z.B. in einem vorgebbaren Leistungsbereich gewählt werden. Weiterhin darf durch die beiden Obergrenzen der ersten und zweiten Stellgröße beispielsweise auch der Offset-Wert einen vorgegebenen Maximalwert nicht übersteigen, da sonst Unstetigkeiten in der Regelstrecke entstehen würden.

Zusätzlich kann es auch vorteilhaft sein, wenn die zweite Stellgröße durch eine vorgebbare Untergrenze begrenzt wird. Dabei kann die vorgebbare Untergrenze der zweiten Stellgröße z.B. in Abhängigkeit von der Differenzspannung zwischen der Eingangs- und der Ausgangsspannung des Tief-Hochsetzstellers verändert werden. Insbesondere kann die Untergrenze für die zweite Stellgröße mit einer sinkenden Differenz zwischen Eingangs- und Ausgangsspannung z.B. von Null bis auf einen vorgebbaren Maximalwert erhöht werden. Die Steigerung der Untergrenze kann z.B. linear erfolgen. Auf diese Weise kann beispielsweise auch bei einer kleinen Last und einer sehr geringen Differenzspannung zwischen Eingangs- und Ausgangsspannung der Tief-Hochsetzsteller bzw. die Ausgangsspannung weiterhin geregelt werden. D.h., das zweite Schaltelement bzw. das Hochsetzer-Schaltelement beginnt idealerweise bereits mit sehr kurzen Einschaltdauern zu takten, wenn sich die Ausgangsspannung an die Eingangsspannung annähert.

Weiterhin ist es günstig, wenn die zwei Schaltelemente des Tief-Hochsetzstellers durch die Steuersignale mit einer gemeinsamen, variablen Schaltfrequenz angesteuert und quasiresonant geschalten werden. Durch ein quasiresonantes Schalten werden die zwei Schaltelemente gleichzeitig und möglichst verlustarm eingeschaltet. Selbst bei Veränderungen der Eingangs- und/oder der Ausgangsspannung bzw. der Last werden dabei die beiden Schaltelemente in einem Spannungsminimum (Valley) der an den beiden Schaltelementen anliegenden Spannung eingeschaltet und dadurch auf einfache Weise relativ geringe Schaltverluste sowie eine geringe Störaussendung - speziell bei hohen Eingangs- bzw. Ausgangsspannungen (z.B. 100 bis 1000 Volt) erreicht und ein wesentlich höherer Wirkungsgrad sichergestellt.

Eine zweckmäßige Weiterbildung des erfindungsgemäßen Verfahrens sieht vor, dass für die vorgebbare erste Verstärkung, für die vorgebbare zweite Verstärkung, für die erste Obergrenze und für die zweite Obergrenze sowie für einen Zusammenhang zwischen Offset-Wert und Differenzspannung zwischen Eingangsspannung und Ausgangsspannung Vorgabewerte derart gewählt werden, dass in einem vorgebbaren Ausgangsleistungsbereich die gemeinsame Schaltfrequenz der Schaltelemente des Tief-Hochsetzstellers in einem vorgegebenen Frequenzbereich liegt. Durch entsprechende Vorgabe der ersten Verstärkung bzw. der zweiten Verstärkung wie der ersten und zweiten Obergrenze kann dafür gesorgt werden, dass die gemeinsame Schaltfrequenz der beiden Schaltelemente im vorgebbaren Leistungsbereich weder eine maximal zulässige Schaltfrequenz überschreitet, noch eine minimal zulässige Schaltfrequenz unterschreitet. Dadurch können sehr einfach hohe Schaltverlust und gegebenenfalls hohe Störaussendungen bei einer zu hohen Schaltfrequenz und Instabilitäten bei der Reglereinheit bzw. im Regelkreis bei einer zu niedrigen Schaltfrequenz verhindert werden.

In einer bevorzugten Ausführungsvariante des erfindungsgemäßen Verfahrens ist vorgesehen, dass zum Erzeugen der ersten Stellgröße aus der Regler-Stellgröße als vorgebbare erste Verstärkung eine Verstärkung mit einem Wert Eins verwendet wird. Das bedeutet, dass die Regler-Stellgröße als erste Stellgröße weitgehend übernommen wird und lediglich durch die vorgebbare erste Obergrenze begrenzt wird, um daraus das erste Steuersignal für das erste Schaltelement bzw. das Tiefsetzer-Schaltelement abzuleiten.

Weiterhin kann es von Vorteil sein, wenn zum Generieren des ersten Steuersignals für das erste Schaltelement aus der ersten Stellgröße und zum Generieren des zweiten Steuersignals für das zweite Schaltelement aus der zweiten Stellgröße ein Sägezahnsignal verwendet wird, welches von einer Oszillatoreinheit erzeugt wird. Dazu wird das Sägezahnsignal beispielsweise mit Hilfe von zwei Komparatoreinheiten mit der ersten und der zweiten Stellgröße verglichen. Auf diese einfache Weise können mit einer Oszillatoreinheit und einem Sägezahnsignal zwei pulsweitenmodulierte Steuersignale zum Ansteuern des ersten und zweiten Schaltelements des Tief-Hochsetzstellers erzeugt werden.

Bei einer zweckmäßigen Ausgestaltung der Erfindung ist vorgesehen, dass für die Ableitung der ersten Stellgröße und der zweiten Stellgröße aus der von der Reglereinheit zur Verfügung gestellten Regler-Stellgröße eine Stellgrößensteuerungseinheit verwendet wird. Das bedeutet, für eine Durchführung des erfindungsgemäßen Verfahrens kann eine eigene Einheit in Form der Stellgrößensteuerungseinheit vorgesehen sein. Von der Stellgrößensteuerungseinheit werden dann z.B. anhand der von der Reglereinheit zur Verfügung gestellten Regler-Stellgröße und anhand von Eingangsparametern, wie z.B. der jeweiligen Eingangsspannung und der jeweiligen Ausgangsspannung des Tief-Hochsetzstellers als Ausgangssignale die erste und die zweite Stellgröße zur Verfügung gestellt, um daraus das erste und das zweite Steuersignal abzuleiten. Dabei kann die Stellgrößensteuerungseinheit beispielsweise als analoge Schaltung z.B. mit Hilfe von Operationsverstärkern realisiert werden.

Alternativ kann die Stellgrößensteuerungseinheit auch als digitale Schaltung z.B. unter Verwendung eines digitalen Signalprozessors bzw. DSP ausgestaltet sein. Idealerweise werden dann auch die Funktionen der Oszillatoreinheit und Komparatoreinheiten, welche z.B. für die Ableitung der Steuersignale aus den Stellgrößen notwendig sind, mit Hilfe des digitalen Signalprozessors realisiert. Dadurch kann die Realisierung bzw. eine Schaltungsanordnung zur Durchführung des erfindungsgemäßen Regelverfahrens einfach und kostengünstig gestaltet werden.

Eine bevorzugte Ausführungsform der Erfindung sieht vor, dass als Reglereinheit zur Regelung der Ausgangspannung des Tief-Hochsetzstellers ein Spannungsregler mit einer unterlagerten Stromregelung verwendet wird. Insbesondere wird von der Reglereinheit als Regelmethode die so genannte Average Current Mode Control verwendet. Dabei gibt ein Spannungsregler auf Basis eines Ist- und Sollwertes z.B. der Ausgangsspannung des Tief-Hochsetzstellers einem untergeordneten Stromregler einen mittleren Stromsollwert beispielsweise für einen Mittelwert eines Stroms durch die Induktivität bzw. Drossel des Tief-Hochsetzstellers vor. Vom untergeordneten Stromregler wird dann der Strom z.B. durch die Drossel mittelbar oder unmittelbar erfasst und dann die Stellgröße erzeugt, welche zum Erzeugen der ersten und zweiten Stellgröße und damit zur Ableitung der Steuersignale zum Schalten bzw. Takten der Schaltelemente des Tief-Hochsetzstellers bzw. zum Ermitteln der Abschaltzeitpunkte der einzelnen Schaltelemente verwendet wird.

Weiterhin ist es günstig, wenn der Tief-Hochsetzsteller in einem kontinuierlichen Betrieb und in einem diskontinuierlichen Betrieb betrieben wird. Der Tief-Hochsetzsteller wird dann im diskontinuierlichen bzw. lückenden Betrieb zu einem optimalen Zeitpunkt geschaltet. Bei Anliegen von entsprechenden Überlasten am Ausgang des Tief-Hochsetzstellers wechselt der Tief-Hochsetzsteller hingegen fließend in den kontinuierlichen Betrieb, um eine minimal zulässige Schaltfrequenz nicht zu unterschreiten und damit Instabilitäten bei der Reglereinheit bzw. im Regelkreis zu verhindern.

### Kurzbeschreibung der Zeichnung

Die Erfindung wird nachfolgend in beispielhafter Weise anhand der beigefügten Figuren erläutert. Es zeigen:
Figur 1 in schematischer und beispielhafter Weise ein System zur Durchführung des erfindungsgemäßen Verfahrens zur Regelung eines Gleichspannungswandlers, insbesondere Tief-Hochsetzstellers
Figur 2 beispielhaft einen Zusammenhang der ersten und zweiten Stellgröße mit der Regler-Stellgröße gemäß dem erfindungsgemäßen Verfahrens zur Regelung eines Tief-Hochsetzstellers
Figur 3a beispielhaft den Zusammenhang der ersten und zweiten Stellgröße mit der Regler-Stellgröße mit Reduktion einer Einschaltzeit des Tiefsetzer-Schaltelements beim Übergang zwischen Tiefsetzer-Modus und Mischbetrieb mittels Skalierung
Figur 3b beispielhaft den Zusammenhang der ersten und zweiten Stellgröße mit der Regler-Stellgröße mit konstanter Reduktion der Einschaltzeit des Tiefsetzer-Schaltelements beim Übergang zwischen Tiefsetzer-Modus und Mischbetrieb
Figur 4 einen beispielhaften Signalverlauf zur Ansteuerung von Schaltelementen eines Tief-Hochsetzstellers

### Ausführung der Erfindung

Figur 1 zeigt schematisch und beispielhaft ein System zur Durchführung des erfindungsgemäßen Verfahrens zur Regelung eines getakteten Tief-Hochsetzstellers TH. Der Tief-Hochsetzsteller oder Buck-Boost-Konverter TH kann eine Eingangsspannung Ue in eine geregelte Ausgangsspannung Ua umwandeln, welche größer, gleich oder kleiner als die Eingangsspannung Ue ist. Dazu kann der Tief-Hochsetzsteller TH in Abhängigkeit von einem Verhältnis zwischen Eingangsspannung Ue und Ausgangsspannung Ua in unterschiedlichen Betriebsmodi, wie beispielsweise in einem Tiefsetzer-Modus und/oder einem Mischbetrieb betrieben werden.

Ein Tief-Hochsetzsteller TH - wie beispielhaft in einem oberen Teil der Figur 1 dargestellt - umfasst einen Tiefsetzsteller, welchem ein Hochsetzsteller nachgeschaltet wird. Eingangsseitig ist üblicherweise eine Eingangskapazität Cl vorgesehen, an welcher die Eingangsspannung Ue anliegt. Die Eingangsspannung Ue ist wie die Ausgangsspannung Ua auf dasselbe Bezugspotential bezogen. Weiterhin weist eine beispielhafte Schaltungsanordnung eines Tief-Hochsetzstellers TH eine Induktivität L bzw. eine Drossel L auf, welche über ein erstes Schaltelemente SE1, welches auch als Tiefsetzer-Schaltelement SE1 bezeichnet werden kann, an die Eingangsspannung Ue angeschlossen ist. Eine Verbindung zwischen der Induktivität L und dem ersten Schaltelement SE1 und dem Bezugspotential weist eine erste Diode D1 auf, welche bei abgeschaltetem Tiefsetzer-Schaltelement SE1 leitend wird.

Ausgangsseitig ist die Induktivität L, welche von einem Drosselstrom I_{L} durchflossen wird, über eine zweite Diode D2 mit einem Ausgang des Tief-Hochsetzsteller TH verbunden. Eine Verbindung zwischen der Induktivität L und der zweiten Diode D2 ist über ein zweites Schaltelemente SE2, welche auch als Hochsetzer-Schaltelement SE2 bezeichnet werden kann, an das Bezugspotential geschaltet. Weiterhin ist ausgangsseitig eine Ausgangskapazität C2 vorgesehen.

Die beiden Schaltelemente SE1, SE2 des Tief-Hochsetzstellers TH werden durch pulsweiten- und frequenzmodulierte Steuersignale Sl, S2 mit einer gemeinsamen, variablen Schaltfrequenz angesteuert und können beispielsweise quasiresonant geschaltet werden. D.h., die beiden Schaltelemente SE1, SE2 werden gleichzeitig in einem Spannungsminimum (Valley) der an den Schaltelementen SE1, SE2 anliegenden Spannung eingeschaltet. Eine Einschaltdauer des jeweiligen Schaltelements SE1, SE2 kann durch ein entsprechendes Steuersignal Sl, S2 vorgegeben werden. Dabei wird für eine Ansteuerung des ersten Schaltelements SE1 bzw. des Tiefsetzer-Schaltelements SE1 ein erstes Steuersignal S1 und für eine Ansteuerung des zweiten Schaltelements SE2 bzw. des Hochsetzer-Schaltelements SE2 ein zweites Steuersignal S2 verwendet.

Für eine Ableitung der pulsweiten- und frequenzmodulierten Steuersignale Sl, S2 wird ein Regelkreis zur Regelung der Ausgangsspannung Ua,ist auf einen vorgebbaren Sollwert Ua,soll eingesetzt, welcher in einem unteren Teil der Figur 1 beispielshaft und schematisch dargestellt ist. Als Regelmethode wird dabei beispielsweise die so genannten Average Current Mode Control verwendet. Dazu wird eine Reglereinheit RE eingesetzt, welche z.B. als Spannungsregler mit einer unterlagerten Stromregelung ausgestaltet ist. Dabei wird einem untergeordneten Stromregler von einem Spannungsregler z.B. auf Basis eines vorgebbaren Sollwerts Ua,soll und einer aktuellen Ausgangsspannung Ua,ist des Tief-Hochsetzstellers TH ein mittlerer Stromsollwert - beispielsweise für einen Mittelwert eines Stroms durch die Drossel des Tief-Hochsetzstellers - vorgegeben. Vom untergeordneten Stromregler wird dann ein Strom, wie z.B. der Strom I_{L} durch die Drossel L, mittelbar oder unmittelbar erfasst und daraus eine Regler-Stellgröße SG ermittelt. Durch die Regler-Stellgröße wird die jeweilige Einschaltdauer des ersten bzw. zweiten Schaltelements SE1, SE2 festgelegt, da die Regler-Stellgröße zur Ableitung der Steuersignale Sl, S2 zum Schalten bzw. Takten der Schaltelemente SE1, SE2 des Tief-Hochsetzstellers herangezogen wird.

Über eine Stellgrößensteuerungseinheit SGS können dann in Abhängigkeit von der Eingangsspannung Ue und der Ausgangsspannung Ua aus der Regler-Stellgröße SG jeweils eigene Stellgrößen SG1, SG2 für das erste und zweite Schaltelemente SE1, SE2 des Tief-Hochstellers TH abgeleitet werden. Dazu wird die Regler-Stellgröße SG zum Erzeugen einer ersten Stellgröße SG1 zur Ableitung des ersten Steuersignals S1 mit einer vorgebbaren ersten Verstärkung verstärkt. Als vorgebbare erste Verstärkung kann beispielsweise eine Verstärkung mit einem Wert Eins verwendet werden. Dadurch wird die Regler-Stellgröße SG beispielsweise als erste Stellgröße SG1 weitgehend ohne Veränderung übernommen.

Zum Erzeugen einer zweiten Stellgröße SG2 zur Ableitung des zweiten Steuersignals S2 wird von der Regler-Stellgröße SG ein Offset-Wert abgezogen und die Regler-Stellgröße SG mit einer vorgebbaren zweiten Verstärkung verstärkt. Dabei wird als vorgebbare zweite Verstärkung eine Verstärkung gewählt, welche maximal gleich, meist aber geringer als die vorgebbare erste Verstärkung zum Erzeugen der ersten Stellgröße SG1 ist.

Die vorgebbare erste Verstärkung und die vorgebbare zweite Verstärkung können beispielsweise derart gewählt werden, dass in einem vorgebbaren Leistungsbereich die gemeinsame, variable Schaltfrequenz der Schaltelemente SE1, SE2 des Tief-Hochsetzstellers TH in einem vorgegebenen Bereich liegt. Beispielsweise können die erste und die zweite Verstärkung so gewählt sein, dass im vorgebbaren Leistungsbereich die Schaltfrequenz weder eine maximal zulässig Schaltfrequenz übersteigt noch eine minimal zulässig Schaltfrequenz unterschreitet.

Die Stellgrößensteuerungseinheit SGS kann beispielsweise als analoge Schaltung z.B. unter Verwendung von Operationsverstärkern ausgeführt sein. Alternativ kann die Stellgrößensteuerungseinheit SGS als digitale Schaltung z.B. mit einem digitalen Signalprozessor realisiert werden.

Von der durch die von der Reglereinheit RE zur Verfügung gestellte Stellgröße SG bzw. von den daraus abgeleiteten Stellgrößen SG1, SG2 wird dann z.B. die Einschaltdauer bzw. ein Abschaltzeitpunkt des jeweiligen Schaltelements SE1, SE2 des Tief-Hochsetzstellers TH festgelegt. So kann z.B. die erste Stellgröße SG1 die Einschaltdauer bzw. einen Abschaltzeitpunkt des ersten Schaltelements SE1 bzw. das Tiefsetzer-Schaltelement SE1 vorgeben. Die zweite Stellgröße SG2 kann z.B. die Einschaltdauer bzw. einen Abschaltzeitpunkt für das zweite Schaltelement SE2 bzw. das Hochsetzer-Schaltelement SE2 vorgeben.

Um von den durch die Stellgrößensteuerungseinheit SGS vorgegebenen Stellgrößen SG1, SG2 zu den beiden pulsweiten- und frequenzmodulierten Steuersignalen Sl, S2 - vor allem zu den unterschiedlichen Einschaltdauern bzw. Abschaltzeitpunkten der beiden Schaltelemente SE1, SE2 - zu gelangen, wird die jeweilige Stellgröße SG1, SG2 beispielsweise mit einem Sägezahnsignal CT verglichen. Dies kann z.B. mit Hilfe von Komparatoreinheiten KE1, KE2 erfolgen. Das Sägezahnsignal CT kann beispielsweise von einer Oszillatoreinheit OS (z.B. Sägezahngenerator) generiert werden. Die beiden Komparatoreinheiten KE1, KE2 liefern dann z.B. mittelbar oder unmittelbar die pulsweiten- und frequenzmodulierten Steuersignale Sl, S2, mit welchen dann die beiden Schaltelemente SE1, SE2 geschaltet werden. Bei digitaler Realisierung der Stellgrößensteuerungseinheit SGS z.B. mit Hilfe eines digitalen Signalprozessors können idealerweise auch die Funktion der Oszillatoreinheit OS sowie die Funktionen der Komparatoreinheiten KE1, KE2 mit Hilfe des digitalen Signalprozessors realisiert werden.

In Figur 2 ist schematisch und beispielhaft ein Zusammenhang bzw. ein Verlauf der ersten Stellgröße SG1 und der zweiten Stellgröße SG2 als Ausgangssignal der Stellgrößensteuerungseinheit SGS mit der Regler-Stellgröße SG als Eingangssignal der Stellgrößensteuerungseinheit SGS für eine Kombination aus Eingangsspannung Ue und Ausgangsspannung Ua dargestellt. Dazu ist auf einer waagrechten Achse (x-Achse) die Regler-Stellgröße SG aufgetragen. Auf einer senkrechten Achse (y-Achse) sind entsprechende Werte der ersten Stellgröße SG1 bzw. der zweiten Stellgröße SG2 ablesbar.

Der beispielhafte Verlauf der ersten Stellgröße SG1, welche zum Ableiten des ersten Steuersignals S1 verwendet wird, beginnt beispielsweise in einem Schnittpunkt der beiden Achsen und verläuft in Form einer Geraden mit einer Steigung k1. Dabei kann die Steigung k1 der Geraden, welche einer vorgebbaren ersten Verstärkung k1 der Regler-Stellgröße SG entspricht, z.B. den Wert Eins aufweisen. Das bedeutet, dass die Regler-Stellgröße mit einer ersten Verstärkung von beispielsweise Eins - d.h. weitgehend unverändert - als erste Stellgröße SG1 übernommen wird. Dabei wird die erste Stellgröße SG1 lediglich durch eine vorgebbare ersten Obergrenze SGlmax begrenzt. Die erste Obergrenze SGlmax kann z.B. derart gewählt sein, dass im vorgebbaren Leistungsbereich die Schaltfrequenz der beiden Schaltelemente SE1, SE2 in einem vorgegebenen Frequenzbereich liegt.

Der beispielshafte Verlauf der zweiten Stellgröße SG2 zeigt, dass die zweite Stellgröße SG2 um einen Offset-Wert OW entlang der positiven x-Achse verschoben ist. Der Offset-Wert OW wird von der Regler-Stellgröße SG abgezogen, um zur zweiten Stellgröße SG2 zu gelangen. Dies ist z.B. durch eine Parallelverschiebung entlang der x-Achse des Verlaufs der ersten Stellgröße (SG1) in Form einer strichlierten Geraden beispielhaft dargestellt. Der Offset-Wert OW kann beispielsweise in Abhängigkeit von einer Differenzspannung zwischen der Eingangsspannung Ue und der Ausgangsspannung Ua des Tief-Hochsetzstellers TH linear verändert z.B. erhöht oder vergrößert werden. Dabei kann z.B. bei einer hohen Differenzspannung zwischen Eingangs- und Ausgangsspannung Ue, Ua der Offset-Wert OW größer sein als bei einer geringen Differenzspannung. D.h. der Verlauf der zweiten Stellgröße SG2 ist bei einer großen Differenz zwischen Eingangs- und Ausgangsspannung Ue, Ua entlang der x-Achse weiter nach rechts gegenüber dem Verlauf der ersten Stellgröße SG1 verschoben als bei einer kleinen Differenz. Für den Betrieb des Tief-Hochsetzstellers TH bedeutet dies, dass bei einer hohen Differenzspannung z.B. durch eine große Eingangsspannung Ue der Tief-Hochsetzsteller TH länger (d.h. über einen größeren Ausgangsleistungsbereich) im Tiefsetzer- bzw. Buck-Modus arbeitet bis ein Wechsel in den Mischbetrieb erfolgt. Bei einer geringen Differenz zwischen Eingangs- und Ausgangsspannung Ue, Ua beginnt das zweite Schaltelement SE2 bzw. das Hochsetzer-Schaltelement SG2 zusätzlich zum ersten Schaltelement SE1 bzw. zum Tiefsetzer-Schaltelement SE1 früher (d.h. schon bei einer kleineren Ausgangsleistung) zu takten.

Weiterhin wird die Regler-Stellgröße SG mit einer vorgebbaren zweiten Verstärkung k2, welche einer Steigung k2 des Verlaufs der zweiten Stellgröße SG2 entspricht, verstärkt. Da die vorgebbare zweite Verstärkung k2 beispielsweise geringer gewählt ist als die vorgebbare erste Verstärkung kl, weist der Verlauf der zweiten Stellgröße SG2 eine geringere Steigung k2 auf als der parallel verschobene Verlauf der ersten Stellgröße SG1. Bei einer gewählten ersten Verstärkung k1 von z.B. Eins kann für die zweite Verstärkung k2 z.B. in Abhängigkeit vom zulässigen bzw. vorgegebenen Bereich für die Schaltfrequenz der beiden Schaltelemente SE1, SE2 - im vorgebbaren Leistungsbereich - ein Wert kleiner Eins gewählt werden. Die zweite Verstärkung k2 kann maximal gleich oder geringer als die erste Verstärkung k1 sein.

Weiterhin ist auch die zweite Stellgröße SG2 nach oben hin mit einer zweiten Obergrenze SG2max begrenzt. Die zweite Obergrenze SG2max kann z.B. ebenfalls derart gewählt sein, dass im vorgebbaren Leistungsbereich die Schaltfrequenz der beiden Schaltelemente SE1, SE2 in einem vorgegebenen Bereich liegt. Weiterhin wird die zweite Stellgröße SG2 durch eine vorgebbare Untergrenze SG2min nach unten begrenzt, damit der Tief-Hochsetzsteller TH auch bei einer kleinen Last und einer sehr geringen Differenzspannung zwischen Eingangs- und Ausgangsspannung Ue, Ua regelbar bleibt. Dabei kann die vorgebbare Untergrenze SG2min beispielsweise in Abhängigkeit von der Differenzspannung zwischen Eingangs- und Ausgangsspannung Ue, Ua des Tief-Hochsetzstellers TH verändert werden und z.B. mit sinkender Differenz zwischen Eingangs- und Ausgangsspannung Ue, Ua linear von Null bis zu einem vorgebbaren Maximalwert erhöht werden. D.h., das zweite Schaltelement SE2 bzw. das Hochsetzer-Schaltelement SE2 beginnt idealerweise bei einer geringen Differenzspannung zwischen Eingangs- und Ausgangsspannung bei kleiner Ausgangsleistung bereits mit sehr kurzen Einschaltdauern zu takten, wenn sich die Ausgangsspannung Ua an die Eingangsspannung Ue annähert.

Beim Übergang zwischen dem Tiefsetzer-Modus und dem Mischbetrieb kann es zu Unstetigkeiten und Instabilitäten bei der Regelung kommen, welche beispielsweise zu Schwingungen im Eingangsfilter und/oder bei der Eingangsspannung Ue des Tief-Hochsetzstellers TH führen können. Um dies zu verhindern, kann beispielsweise bei Überschreiten des Offset-Wertes OW durch die Regler-Stellgröße SG eine Ableitung der ersten Stellgröße SG1 aus der Regler-Stellgröße SG mittels einfacher Kompensationsvarianten derart angepasst werden, dass eine Einschaltdauer des ersten Schaltelements SE1 bzw. des Tiefsetzer-Schaltelements SE1 unmittelbar reduziert wird. Auf diese Weise wird eine sprunghafte Änderung des Stroms I_{L} durch die Induktivität L des Tief-Hochsetzstellers TH verhindert, welche insbesondere durch nichtlineare parasitäre Kapazitäten der Schaltelemente SE1, SE2 (z.B. Feldeffekttransistoren, etc.) bedingt ist.

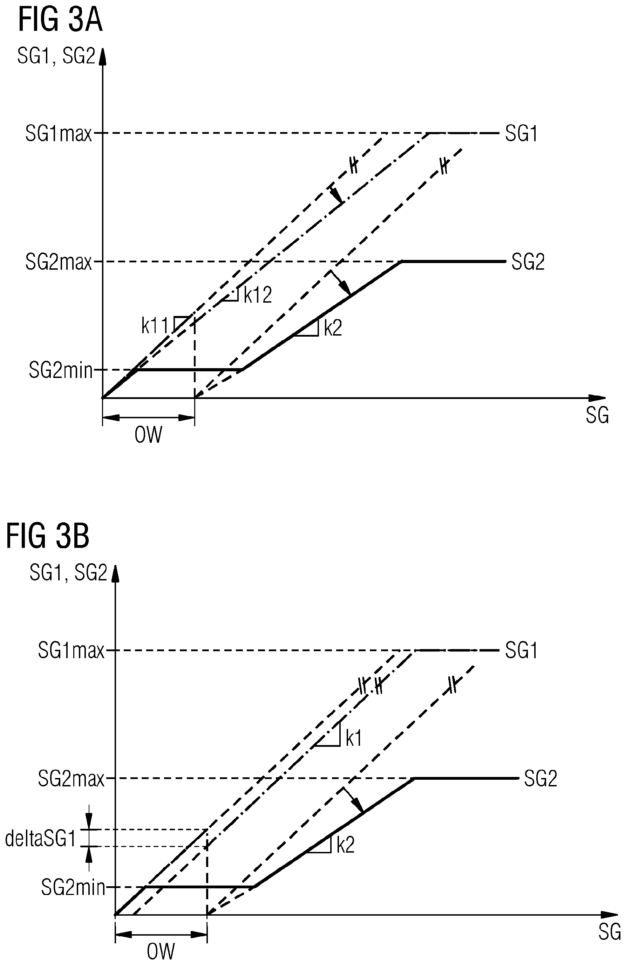

Einfache Kompensationsvarianten sind in den Figuren 3a und 3b beispielhaft und schematisch anhand des Zusammenhangs der ersten und zweiten Stellgröße SG1, SG2 mit der Regler-Stellgröße SG dargestellt.

Figur 3a zeigt wiederum den Zusammenhang zwischen der ersten Stellgröße SG1 und der zweiten Stellgröße SG2, welche auf der senkrechten Achse aufgetragen sind, mit der Regler-Stellgröße SG, die auf der waagrechten Achse aufgetragen ist, wobei bei Eintritt in den Mischbetrieb die Einschaltdauer des ersten Schaltelements SE1 beispielsweise mittels Skalierung der Stellgröße SG1 reduziert wird.

Die zweite Stellgröße SG2 ist in Figur 3a unverändert gegenüber dem in Figur 2 beispielhaft dargestellten Zusammenhang mit der Regler-Stellgröße dargestellt. D.h. die zweite Stellgröße SG2 weist wieder die zweite Obergrenze SG2max und die Untergrenze SG2min auf. Die zweite Stellgröße SG2 ist gegenüber der ersten Stellgröße SG1 um den Offset-Wert OW verschoben und weist eine vorgebbare zweite Verstärkung k2 auf, welche einer Steigung k2 des Verlaufs der zweiten Stellgröße SG2 entspricht.

Die erste Stellgröße SG1 ist wieder durch die erste Obergrenze SGlmax begrenzt. Bis zum Erreichen des Offset-Wertes OW durch die Regler-Stellgröße SG weist die Steigung bzw. die Verstärkung der ersten Stellgröße SG1 einen ersten Steigungs- bzw. Verstärkungswert von k11 (z.B. Eins) auf. Sobald die Regler-Stellgröße SG den Offset-Wert OW überschreitet - d.h. der Tief-Hochsetzsteller TH vom Tiefsetzer-Modus in den Mischbetrieb wechselt, erfolgt eine Hinunterskalierung der ersten Stellgröße SG1. D.h. es erfolgt eine Veränderung der Steigung bzw. der Verstärkung der ersten Stellgröße auf einen zweiten Steigungs- bzw. Verstärkungswert k12, welcher geringer ist als der erste Steigungs- bzw. Verstärkungswert k11. In Figur 3a ist dies durch eine Abweichung des ersten Stellgrößenverlaufs SG1 vom ursprünglichen, strichliert dargestellten Stellgrößenverlauf der ersten Stellgröße SG1 beispielhaft dargestellt. Diese Hinunterskalierung der ersten Stellgröße SG1 bewirkt eine Veränderung des ersten Steuersignals S1 und damit eine Reduktion der Einschaltdauer des ersten Schaltelements SE1, welche unmittelbar beim Wechsel zum Mischbetrieb wirksam werden kann. Durch die Kompensationsvariante der Skalierung weist die erste Stellgröße SG1 beispielsweise im Mischbetrieb eine geringere Steigung bzw. Verstärkung k12 als im Tiefsetzer-Betrieb auf. Je nach jeweiligem Offset-Wert OW, welcher in Abhängigkeit von einer Differenz zwischen Eingangsspannung Ue und Ausgangsspannung Ua des Tief-Hochsetzstellers linear verändert werden kann, kann sich die Einschaltdauer des ersten Schaltelements SE1 bzw. des Tiefsetzer-Schaltelements bei Eintritt in den Mischbetrieb um unterschiedliche Werte reduzieren.

Auch Figur 3b zeigt den Zusammenhang zwischen der ersten Stellgröße SG1 und der zweiten Stellgröße SG2, welche auf der senkrechten Achse aufgetragen sind, mit der Regler-Stellgröße SG, die auf der waagrechten Achse aufgetragen ist. Dabei wird allerdings beim Erreichen des Offset-Wertes OW durch die Regler-Stellgröße SG die Einschaltdauer des ersten Schaltelements SE1 bzw. des Tiefsetzer-Schaltelements um einen konstanten Wert deltaSGl reduziert. Auch in Figur 3b ist die zweite Stellgröße SG2 wieder gegenüber der Figur 2 unverändert. D.h. die zweite Stellgröße SG2 weist wieder die zweite Obergrenze SG2max und die Untergrenze SG2min auf und ist gegenüber der ersten Stellgröße SG1 um den Offset-Wert OW verschoben. Weiterhin weist die zweite Stellgröße wieder die vorgebbare zweite Verstärkung k2 auf, welche der Steigung k2 des Verlaufs der zweiten Stellgröße SG2 entspricht.

Die erste Stellgröße SG1, welche wieder durch die erste Obergrenze SGlmax begrenzt ist, weist einen Verlauf mit der Steigung kl, welcher der vorgebbaren ersten Verstärkung entspricht, auf. Für eine Kompensation wird von der ersten Stellgröße SG1 der konstanter Wert deltaSGl abgezogen, sobald die Regler-Stellgröße SG den Offset-Wert OW überschreitet - d.h. der Tief-Hochsetzsteller TH vom Tiefsetzer-Modus in den Mischbetrieb wechselt. Durch eine Abzug des konstanten Wertes deltaSGl wird die erste Stellgröße SG1 und das daraus abgeleitete erste Steuersignal S1 verändert. Dadurch ergibt sich eine rasche bzw. sofortige Reduktion der Einschaltdauer des ersten Schaltelements SE1 bzw. des Tiefsetzer-Schaltelements SE1. In Figur 3b wird diese Reduktion durch eine Parallelverschiebung des Verlaufs der ersten Stellgröße SG1 um den konstanten Wert deltaSGl in Richtung der waagrechten Achse (d.h. nach unten) ab dem Erreichen des Offset-Werts OW durch die Regler-Stellgröße SG beispielhaft dargestellt. Durch Abziehen des konstanten Werts deltaSGl erfolgt eine konstante Reduktion der Einschaltdauer des ersten Schaltelements SE1 beim Eintritt in den Mischbetrieb unabhängig vom jeweils aktuellen Offset-Wert OW.

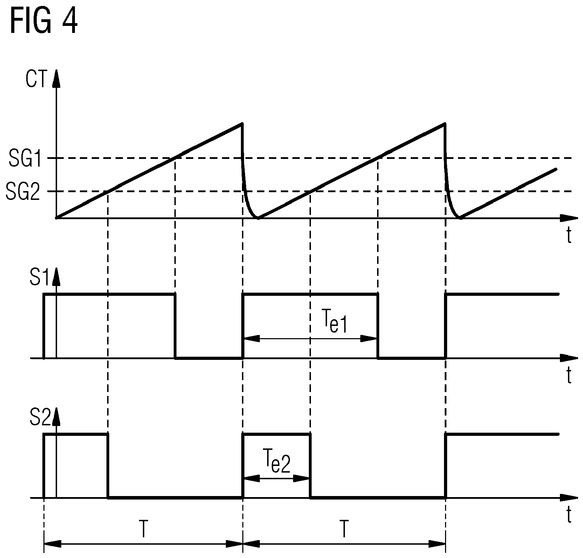

In Figur 4 ist schematisch und beispielhaft anhand von Signalverläufen dargestellt, wie aus der ersten und zweiten Stellgröße SG1, SG2, welche mittels des erfindungsgemäßen Verfahrens z.B. am Ausgang der Stellgrößensteuerung SGS zur Verfügung gestellt werden, das erste bzw. das zweite Steuersignal Sl, S2 zur Ansteuerung der beiden Schaltelemente SE1, SE2 des Tief-Hochsetzstellers TH abgeleitet werden.

Ein erster Signalverlauf CT zeigt einen zeitlichen Verlauf des Sägezahnsignals CT, welcher z.B. von der Oszillatoreinheit OS generiert wird. Im ersten Signalverlauf CT sind weiterhin die erste Stellgröße SG1 und die zweite Stellgröße SG2 eingetragen, welche - wie z.B. in Figur 2, Figur 3a oder Figur 3b dargestellt - in Abhängigkeit von der jeweiligen Eingangs- und Ausgangsspannung Ue, Ua des Tief-Hochsetzstellers TH aus der Regler-Stellgröße SG ermittelt werden.

Ein zweiter Signalverlauf S1 zeigt einen zeitlichen Verlauf des ersten Steuersignals S1, durch welches das erste Schaltelement SE1 bzw. das Tiefsetzer-Schaltelement SE1 angesteuert wird.

Ein dritter Signalverlauf S2 zeigt einen zeitlichen Verlauf des zweiten Steuersignals S2, durch welches das zweite Schaltelement SE2 bzw. das Hochsetzer-Schaltelement SE2 angesteuert wird.

Die erste Stellgröße SG1, welche aufgrund der größeren ersten Verstärkung k1 immer über der zweiten Stellgröße SG2 liegt, und die zweite Stellgröße SG2 werden beispielsweise mit Hilfe der zwei Komparatoreinheiten KE1, KE2 mit dem Sägezahnsignal CT verglichen. Dadurch werden das erste Steuersignal S1 für das Tiefsetzer-Schaltelement SE1 und das zweite Steuersignal S2 für das Hochsetzer-Schaltelement SE2 erzeugt, wobei die beiden Steuersignale Sl, S2 dieselbe Periodendauer T aufweisen. Die beiden Steuersignale werden - wie aus dem zweiten und dritten Signalverlauf Sl, S2 ersichtlich zum selben Einschaltzeitpunkt - z.B. mittels quasiresonantem Schalten - gesetzt. Allerdings werden die beiden Steuersignal Sl, S2 in Abhängigkeit von der jeweiligen Stellgröße SG1, SG2 bzw. deren Amplituden nach unterschiedlich langen Einschaltdauern Tₑ₁, Tₑ₂ zurückgesetzt. Überschreitet das Sägezahnsignal CT die zweite Stellgröße SG2, welche aufgrund der geringeren zweiten Verstärkung k2 den niedrigeren Wert aufweist, so wird das Steuersignal S2 - wie im dritten Signalverlauf S2 beispielhaft dargestellt - nach der Einschaltdauer Tₑ₂ des zweiten Schaltelements bzw. des Hochsetzer-Schaltelements SE2 zurückgesetzt. Erreicht das ansteigende Sägezahnsignal CT dann den Wert der ersten Stellgröße SG1, so wird auch das erste Steuersignal S1 zurückgesetzt und das erste Schaltelement bzw. das Tiefsetzer-Schaltelement SE1 nach der Einschaltdauer Tₑ₁ abgeschaltet.

Damit ist weiterhin das Hochsetzer-Schaltelement SE2 nur eingeschaltet, wenn auch das Tiefsetzer-Schaltelement SE1 eingeschaltet ist. Überschreitet die Regler-Stellgröße SG den von der Differenz zwischen Eingangs- und Ausgangsspannung Ue, Ua des Tief-Hochsetzstellers TH abhängigen, vorgebbaren Offset-Wert nicht, so ist die zweite Stellgröße SG2 Null und es taktet nur das Tiefsetzer-Schaltelement SE1 allein bzw. der Tief-Hochsetzsteller arbeitet im Tiefsetzer- bzw. Buck-Modus.

## Patentansprüche

1. Verfahren zum Regeln eines Tief-Hochsetzstellers (TH) mit zumindest zwei Schaltelementen (SE1, SE2) und einer Induktivität, von welchem eine Eingangsspannung (Ue) in eine geregelte Ausgangsspannung (Ua) umgewandelt wird, wobei ein erstes Schaltelement (SE1) bzw. Tiefsetzer-Schaltelement (SE1) durch ein erstes Steuersignal (Sl) getaktet wird und ein zweites Schaltelement (SE2) bzw. Hochsetzer-Schaltelement (SE2) durch ein zweites Steuersignal (S2) getaktet wird, und wobei das erste Steuersignal (Sl) und das zweite Steuersignal (S2) aus einer von einer Reglereinheit (RE) zur Verfügung gestellten Regler-Stellgröße (SG) abgeleitet werden, durch welche eine Einschaltdauer (Tₑ₁) für das erste Schaltelement (SE1) und eine Einschaltdauer (Tₑ₂) für das zweite Schaltelement (SE2) festgelegt werden, ***dadurch gekennzeichnet, dass*** in Abhängigkeit von der Eingangsspannung (Ue) und Ausgangsspannung (Ua) des Tief-Hochsetzstellers (TH) aus der Regler-Stellgröße (SG) eine erste Stellgröße (SG1) zur Ableitung des ersten Steuersignals (Sl) und eine zweite Stellgröße (SG2) zur Ableitung des zweiten Steuersignals (S2) erzeugt werden, dass zum Erzeugen der ersten Stellgröße (SG1) die Regler-Stellgröße (SG) mit einer vorgebbaren ersten Verstärkung (kl) verstärkt wird, und dass zum Erzeugen der zweiten Stellgröße (SG2) von der Regler-Stellgröße (SG) ein Offset-Wert (OW) abgezogen wird und die Regler-Stellgröße (SG) mit einer vorgebbaren zweiten Verstärkung (k2) verstärkt wird, wobei die vorgebbare zweite Verstärkung (k2) maximal gleich oder geringer als die vorgebbare erste Verstärkung (kl) ist.

2. Verfahren nach Anspruch 1, ***dadurch gekennzeichnet, dass*** bei Überschreiten des Offset-Wertes (OW) durch die Regler-Stellgröße (SG) eine Ableitung der ersten Stellgröße (SG1) aus der Regler-Stellgröße (SG) derart verändert wird, dass die Einschaltdauer (Tₑ₁) für das erste Schaltelement (SE1) unmittelbar reduziert wird.

3. Verfahren nach einem der Ansprüche 1 bis 2, ***dadurch gekennzeichnet, dass*** der Offset-Wert (OW) in Abhängigkeit von einer Differenzspannung zwischen der Eingangsspannung (Ue) und der Ausgangsspannung (Ua) des Tief-Hochsetzstellers (TH) verändert wird.

4. Verfahren nach Anspruch 3, ***dadurch gekennzeichnet, dass*** der Offset-Wert (OW) mit steigender Differenzspannung zwischen Eingangsspannung (Ue) und Ausgangsspannung (Ua) von Null bis zu einem vorgebbaren Maximalwert erhöht wird.

5. Verfahren nach einem der vorangegangenen Ansprüche, ***dadurch gekennzeichnet, dass*** die erste Stellgröße (SG1) durch eine erste Obergrenze (SG1max) und die zweite Stellgröße (SG2) durch eine zweite Obergrenze (SG2max) begrenzt werden.

6. Verfahren nach einem der vorangegangenen Ansprüche, ***dadurch gekennzeichnet, dass*** die zweite Stellgröße (SG2) durch eine vorgebbare Untergrenze (SG2min) begrenzt wird.

7. Verfahren nach einem der vorangegangenen Ansprüche, ***dadurch gekennzeichnet, dass*** die zwei Schaltelemente (SE1, SE2) des Tief-Hochsetzstellers (TH) durch die Steuersignale (Sl, S2) mit einer gemeinsamen, variablen Schaltfrequenz angesteuert und quasiresonant geschalten werden.

8. Verfahren nach einem der vorangegangenen Ansprüche, ***dadurch gekennzeichnet, dass*** für die vorgebbare erste Verstärkung (kl), für die vorgebbare zweite Verstärkung (k2), für die erste Obergrenze (SGlmax), für die zweite Obergrenze (SG2max) sowie für einen Zusammenhang zwischen Offset-Wert (OW) und Differenzspannung zwischen Eingangsspannung (Ue) und Ausgangsspannung (Ua) Vorgabewerte derart gewählt werden, dass in einem vorgebbaren Ausgangsleistungsbereich die gemeinsame Schaltfrequenz der Schaltelemente (SE1, SE2) des Tief-Hochsetzstellers (TH) in einem vorgegebenen Frequenzbereich liegt.

9. Verfahren nach einem der vorangegangenen Ansprüche, ***dadurch gekennzeichnet, dass*** zum Erzeugen der ersten Stellgröße (SG1) aus der Regler-Stellgröße (SG) als vorgebbare erste Verstärkung (k1) eine Verstärkung mit einem Wert Eins verwendet wird.

10. Verfahren nach einem der vorangegangenen Ansprüche, ***dadurch gekennzeichnet, dass*** zum Generieren des ersten Steuersignals (Sl) für das erste Schaltelement (SE1) aus der ersten Stellgröße (SG1) und zum Generieren des zweiten Steuersignals (S2) für das zweite Schaltelement (SE2) aus der zweiten Stellgröße (SG2) ein Sägezahnsignal (CT) verwendet wird, welches von einer Oszillatoreinheit (OS) erzeugt wird.

11. Verfahren nach einem der vorangegangenen Ansprüche, ***dadurch gekennzeichnet, dass*** für die Ableitung der ersten Stellgröße (SG1) und der zweiten Stellgröße (SG2) aus der von der Reglereinheit (RE) zur Verfügung gestellten Regler-Stellgröße (SG) ein Stellgrößensteuerungseinheit (SGS) vorgesehen wird.

12. Verfahren nach Anspruch 11, ***dadurch gekennzeichnet, dass*** die Stellgrößensteuerungseinheit (SGS) als analoge Schaltung mit Hilfe von Operationsverstärkern realisiert wird.

13. Verfahren nach Anspruch 11, ***dadurch gekennzeichnet, dass*** die Stellgrößensteuerungseinheit (SGS) als digitale Schaltung mit Hilfe eines digitalen Signalprozessors realisiert wird.

14. Verfahren nach einem der vorgegangenen Ansprüche, ***dadurch gekennzeichnet, dass*** als Reglereinheit (RE) zur Regelung der Ausgangspannung (Ua) des Tief-Hochsetzstellers (TH) ein Spannungsregler mit einer unterlagerten Stromregelung verwendet wird.

15. Verfahren nach einem der vorangegangenen Ansprüche, ***dadurch gekennzeichnet, dass*** der Tief-Hochsetzsteller (TH) in einem kontinuierlichen Betrieb und in einem diskontinuierlichen Betrieb betrieben wird.
